# EUROPÄISCHE PATENTSCHRIFT

(11) **EP 0 606 636 B1**
(45) Veröffentlichungstag und Bekanntmachung des Hinweises auf die Patenterteilung: **01.05.1996**
(21) Anmeldenummer: 93120855.7
(22) Anmeldetag: 23.12.1993
(51) Int. Cl.: C08L 33/12, C08L 51/00

(54) **Formmassen auf der Basis von Polymethylmethacrylat mit verbesserter Kerbschlagzähigkeit**
Polymethyl methacrylate based moulding materials having improved impact strength
Matières à mouler à base de polyméthacrylate de méthyle ayant une résistance aux chocs améliorée

(30) Priorität: 13.01.1993 DE 4300596
(43) Veröffentlichungstag der Anmeldung: 20.07.1994
(73) Patentinhaber: BASF Aktiengesellschaft, D-67063 Ludwigshafen (DE)
(72) Erfinder: Deckers, Andreas, Dr., D-67063 Ludwigshafen (DE); Guentherberg, Norbert, Dr., D-67346 Speyer (DE); Niessner, Norbert, Dr., D-67159 Friedelsheim (DE)

(56) Entgegenhaltungen:
- EP-A- 0 352 455
- DE-A- 2 039 022
- DATABASE WPI Week 9013, Derwent Publications Ltd., London, GB; AN 90-094618 & JP-A-2 045 547 (MITSUBISHI RAYON KK) 15. Februar 1990
- DATABASE WPI Week 9013, Derwent Publications Ltd., London, GB; AN 90-094618 & JP-A-2 045 547

## Beschreibung

Die vorliegende Erfindung betrifft Formmassen auf der Basis von Polymethylmethacrylat, enthaltend im wesentlichen
A) 99,99 bis 95,0 Gew.-% einer Mischung aus im wesentlichen
   a₁) 5 bis 95 Gew.-% Polymethylmethacrylat, erhältlich durch polymerisation einer Mischung aus im wesentlichen
      a₁₁) 80 bis 100 Gew.-% Methylmethacrylat und
      a₁₂) 0 bis 20 Gew.-% eines C₁-C₂₀-Alkylesters der Acrylsäure, und
   a₂) 95 bis 5 Gew.-% eines mehrstufigen Pfropfcopolymerisats auf der Basis eines C₁-C₂₀-Alkylesters der Acryl- und/ oder Methacrylsäure
B) 0,01 bis 5,0 Gew.-% eines Polysiloxans der allgemeinen Formel I 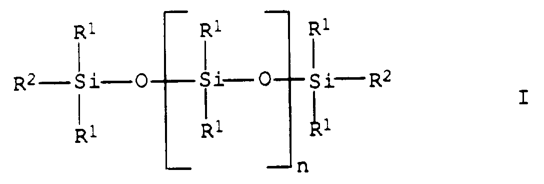 in der
   - R¹: für C₁-C₆-Alkyl oder C₆-C₁₀-Aryl, und
   - R: für Hydroxy-C₁-C₆-alkyl oder Amino-C₁-C₆-alkyl stehen, und
   - n: eine natürliche Zahl von 5 bis 200 bedeutet.

Außerdem betrifft die Erfindung ein Verfahren zur Herstellung der erfindungsgemäßen Formmassen, ihre Verwendung zur Herstellung von Formkörpern sowie Formkörper, enthaltend die erfindungsgemäßen Formmassen.

Polymethylmethacrylat-Formmassen (PMMA) zeichnen sich insbesondere durch ihre hohe Bewitterungsstabilität und Transparenz aus. Nachteilig ist aber in vielen Fällen die geringe Zähigkeit der hergestellten Formkörper. Aus diesem Grund mischt man dem Acrylharz häufig mehrstufige Pfropfkautschuke, wie in DE-A 22 53 689 beschrieben, bei. Dabei wird in der Regel bei Auswahl einer bestimmten Monomerzusammensetzung des Modifiers die Transparenz von PMMA erhalten.

Häufig brechen Formteile aus diesen zähmodifizierten Massen jedoch an der sog. Einspritzstelle (Anguß). Dies ist auf eine zu geringe Kerbschlagzähigkeit zurückzuführen.

In DE-A 38 21 337 werden schlagzähmodifizierte PMMA-Massen mit einer erhöhten Kerbschlagzähigkeit beschrieben. Als Additive kommen Polysiloxane zum Einsatz. Nachteilig hierbei ist allerdings, daß die beschriebenen Polysiloxane zu einer deutlichen Verringerung der Lichtdurchlässigkeit führen.

Darüber hinaus wird in vielen Fällen ein Anstieg des Gelbwertindexes beobachtet.

Aufgabe der vorliegenden Erfindung war es daher, Formmassen auf der Basis von Polymethylmethacrylat mit einer verbesserten Kerbschlagzähigkeit bei gleichzeitig hoher Lichtdurchlässigkeit und einem niedrigen Gelbwertindex, bereitzustellen.

Demgemäß wurden die eingangs definierten Formmassen auf der Basis von Polymethylmethacrylat gefunden.

Des weiteren wurde ein Verfahren zur Herstellung der erfindungsgemäßen Formmassen, deren Verwendung zur Herstellung von Formkörpern sowie Formkörper, enthaltend die erfindungsgemäßen Formmassen, gefunden.

Komponente A) ist erfindungsgemäß eine Mischung aus im wesentlichen
- 5 bis 95 Gew.-%,: vorzugsweise 50 bis 85 Gew.-%, Polymethylmethacrylat, erhältlich durch Polymerisation einer Mischung aus im wesentlichen
a₁₁) 80 bis 100 Gew.-%, vorzugsweise 90 bis 99 Gew.-%, Methylmethacrylat und
a₁₂) 0 bis 20 Gew.-%, vorzugsweise 1 bis 10 Gew.-%, eines C₁-C₂₀-Alkylesters der Acrylsäure, und
- 95 bis 5 Gew.-%,: vorzugsweise 15 bis 50 Gew.-%, eines mehrstufigen Pfropfpolymerisats auf der Basis eines C₁-C₂₀-Alkylesters der Acryl- und/oder Methacrylsäure.

Als C₁-C₂₀-Alkylester der Acrylsäure (Komponente a₁₂))verwendet man bevorzugt die C₁-C₄-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als besonders vorteilhaft haben sich nach den bisherigen Beobachtungen Polymerisate aus 99 Gew.-% Methylmethacrylat und 1 Gew.-% Methylacrylat mit einem Molekulargewicht (Gewichtsmittelwert M_{w}) von 60.000 bis 300.000 g/mol, insbesondere von 80.000 bis 150.000 g/mol, erwiesen.

Das Polymethylmethacrylat (Komponente a₁)) stellt man in der Regel nach bekannten Polymerisationsverfahren wie Masse-, Lösungs-, Emulsions- oder Perlpolymerisation her. Solche Verfahren sind beispielsweise in Kunststoffhandbuch, Bd. 9, Vieweg und Esser; Polymethylmethacrylat, Carl-Hanser-Verlag, München, 1975, S. 36ff, beschrieben.

Als mehrstufige Pfropfcopolymerisate (Komponente a₂) verwendet man erfindungsgemäß Pfropfcopolymerisate auf der Basis eines C₁-C₂₀-Alkylesters der Acryl- und/oder Methacrylsäure.

Bevorzugt verwendet man Pfropfcopolymerisate, die einen "harten" Kern und eine "harte" äußere Hülle aufweisen. Zwischen Kern und äußerer Hülle können vorzugsweise weitere Hüllen eingebaut sein, wobei eine alternierende Abfolge der Hüllen hinsichtlich ihrer Glasübergangstemperaturen besonders bevorzugt ist. Beispielsweise besteht ein dreistufiges Pfropfcopolymerisat bevorzugt aus einem "harten" Kern, einer ersten "weichen" Hülle und einer abschließenden "harten" Hülle. Ein fünfstufiges Pfropfcopolymerisat hat bevorzugt die Abfolge hart(Kern)-weich-hart-weich-hart (äußere Hülle). Unter "hart" soll dabei eine nicht-elastomere Phase mit einer Glasübergangstemperatur von mindestens 50^{°}C, unter "weich" eine elastomere Phase mit einer Glasübergangstemperatur von kleiner als 25^{°}C verstanden werden.

Besonders bevorzugte mehrstufige Pfropfcopolymerisate sind erhältlich durch
Polymerisation von 5 bis 25 Gew.-%, bevorzugt von 10 bis 20 Gew.-%, eines Monomerengemisches aus im wesentlichen
- a₂₁₁): 85 bis 100 Gew.-%, bevorzugt von 95 bis 99 Gew.-%, Methylmethacrylat,
- a₂₁₂): 0 bis 5 Gew.-%, bevorzugt von 0,5 bis 2,5 Gew.-%, eines Vernetzers und
- a₂₁₃): 0 bis 10 Gew.-%, bevorzugt von 0,5 bis 2,5 Gew.-%, eines Pfropfvernetzers,
anschließende Polymerisation in Gegenwart des nach Stufe a₂₁) erhaltenen Polymerisates von 40 bis 80 Gew.-%, bevorzugt von 50 bis 70 Gew.-%, eines Monomerengemisches aus im wesentlichen
- a₂₂₁): 0 bis 40 Gew.-%, bevorzugt von 14,5 bis 25 Gew.-%, eines vinylaromatischen Monomeren,
- a₂₂₂): 60 bis 100 Gew.-%, bevorzugt von 85 bis 73 Gew.-%, eines C₁-C₂₀-Alkylesters der Acrylsäure und
- a₂₂₃): 0 bis 5 Gew.-%, bevorzugt von 0,5 bis 2 Gew.-%, eines Pfropfvernetzers,
und
anschließende Polymerisation in Gegenwart des nach Stufe a22) erhaltenen Polymerisates von 10 bis 35 Gew.-%, bevorzugt von 15 bis 30 Gew.-%, eines Monomerengemisches aus im wesentlichen
- a₂₃₁): 80 bis 100 Gew.-%, bevorzugt von 90 bis 99 Gew.-%, Methylmethacrylat und
- a₂₃₂): 0 bis 20 Gew.-%, bevorzugt von 1 bis 10 Gew.-%, eines C₁-C₂₀-Alkylesters der Acrylsäure,
wobei sich die Gewichtsprozente der in den jeweiligen Stufen eingesetzten Monomerengemische auf 100 Gew.-% addieren.

Als Vernetzer (Komponente a₂₁₂)) eignen sich beispielsweise vinylisch ungesättigte Verbindungen mit wenigstens zwei Doppelbindungen wie Alkylenglykoldi(meth)acrylate, z.B. Ethylenglykoldi(meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- und Polyethylenglykol-di(meth)acrylate, 5 Acrylate und Methacrylate von Glycerin, Trimethylolpropan, Pentaerythrit, Inosit und ähnliche Zuckeralkohole,
Acryl- und Methacrylamide von Ethylendiamin und andere aliphatische Di- und Polyamine,
Triallylcyanurat und Triallylisocyanurat sowie
Vinylbenzole wie Divinylbenzol und Trivinylbenzol.

Die Verwendung der Komponente a₂₁₂) als Vernetzer ist nicht zwingend notwendig, jedoch bevorzugt.

Die obengenannten Vernetzer werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Als Pfropfvernetzer (Komponente a₂₁₃)) eignen sich
Dicyclopentadienyl und
Allyl-, Methallyl- und Crotylester einer α,β-ungesättigten-Carbonsäure oder Dicarbonsäure, bevorzugt Allylmethacrylat.

Pfropfaktive Comonomere sorgen für eine äußere Vernetzung und bewirken beim Aufbau eines Emulsionspfropfcopolymerisates beispielsweise die Verknüpfung der Kernphase mit der nachfolgenden Polymerisationsstufe. Pfropfvernetzer wie Allylmethacrylat zeigen dieses Verhalten, weil eine polymerisierbare Doppelbindung (Doppelbindung des Säureteils) mit vergleichbarer Geschwindigkeit wie das Hauptmonomere (Methylmethacrylat) polymerisiert. Dagegen reagiert die Doppelbindung der Allylgruppe mit einer deutlich niedrigeren Polymerisationsgeschwindigkeit, so daß am Ende der Polymerisation einige dieser Doppelbindungen unverändert in der Kernphase erhalten bleiben, wodurch eine Pfropfvernetzung zwischen zwei Phasen möglich ist.

Mehr als 10 Gew.-% des Pfropfvernetzers (Komponente a₂₁₃)) führen nach den bisherigen Beobachtungen zu unzureichenden Schlagzähigkeitswerten.

Als vinylaromatische Monomere (Komponente a₂₂₁)) eignen sich vorzugsweise Styrol, α-Methylstyrol, tert.-Butylstyrol, Monochlorstyrol und Vinyltoluol, besonders bevorzugt Styrol und α-Methylstyrol.

Als C₁-C₂₀-Alkylester der Acrylsäure (Komponente a₂₂₂)) verwendet man bevorzugt die C₁-C₄-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als Pfropfvernetzer (Komponente a₂₂₃)) eignen sich vorzugsweise die bei Komponente a₂₁₃) genannten Verbindungen.

Die Herstellung des Pfropfcopolymerisates führt man in der Regel nach bekannten Polymerisationsverfahren, z.B. der Emulsionspolymerisation, durch. Solche Verfahren sind beispielsweise in DE-A 22 53 689 beschrieben.

Das erfindungsgemäße Polymethylmethacrylat (Komponente a₁)) und das erfindungsgemäße Pfropfcopolymerisat (Komponente a2)) mischt man im allgemeinen im plastifizierten Zustand in an sich bekannter Weise beispielsweise auf Schneckenknetern, insbesondere Doppelschneckenextrudern.

Die Menge der Komponente A), bezogen auf das Gesamtgewicht der erfindungsgemäßen Formmassen beträgt 99,99 bis 95,0 Gew.-%, vorzugsweise 99,0 bis 99,95 Gew.-%.

Die Komponente B) ist ein Polysiloxan der vorstehend angegebenen Formel I. Dabei steht R¹ erfindungsgemäß für C₁-C₆-Alkyl wie Methyl, Ethyl, n-Propyl, i-Propyl, n-Butyl, i-Butyl, sek-Butyl, tert.-Butyl, Pentyl oder Hexyl, insbesondere Methyl oder Ethyl, oder C₆-C₁₀-Aryl wie Phenyl oder Naphthyl, insbesondere Phenyl. R bedeutet erfindungsgemäß Hydroxy-C₁-C₆-alkyl oder Amino-C₁-C₆-alkyl wie Hydroxymethyl, Hydroxyethyl, Hydroxy-n-propyl, Hydroxy-i-propyl, Hydroxybutyl, Hydroxypentyl, Hydroxyhexyl, Aminomethyl, Aminoethyl, Amino-n-propyl, Amino-i-propyl, Aminobutyl, Aminopentyl oder Aminohexyl, vorzugsweise Hydroxy-n- und -i-propyl sowie Amino-n- und -i-propyl.

Der Polymerisationsgrad n liegt im Bereich von 5 bis 200, bevorzugt von 10 bis 150, besonders bevorzugt von 20 bis 100. Geeignete Produkte sind einerseits als Handelsprodukte erhältlich, beispielsweise unter dem Namen Tegomer® der Th. Goldschmidt AG oder Silikone der Wacker-Chemie GmbH, andererseits nach bekannten Methoden herstellbar (s. I. Yilgör, J.E. McGrath in Advances in Polymer Science, Bd. 86, Springer-Verlag 1988, S. 1-86).

Die erfindungsgemäßen Formmassen können, bezogen auf das Gesamtgewicht der Komponenten A) und B), noch 0 bis 2 Gew.-%, bevorzugt 0,05 bis 0,5 Gew.-%, an Verarbeitungsstabilisatoren wie Antioxidantien und Wärmestabilisatoren enthalten.

Als Antioxidantien seien beispielhaft genannt sterisch gehinderte Phenole wie Triethylenglykol-bis(3,3-t-butyl-4-hydroxy-5-methylphenyl)-propionat, 1,6-Hexandiol-bis-3-(3,5-di-t-butyl-4-hydroxyphenyl)-propionat, 4-[[4,6-bis(octylthio)-1,3,5-triazin-2-yl]-amino]-2,6-bis(1,1-dimethylethyl)phenol, Pentaerythit-tetrakis-[3-(3,5-di-t-butyl-4-hydroxyphenyl)propionat und Octadecyl-3-(3,5-di-t-butyl-4-hydroxyphenyl)-propionat.

Als Wärmestabilisatoren seien beispielhaft genannt Bis-stearylpentaerythrol-diphosphit, Tris-(nonylphenyl)-phosphit, Triphenylphosphat und Tris(2,4-di-t-butylphenyl)-phosphit.

Zur Herstellung der erfindungsgemäßen Formmassen kommen in der Regel alle üblichen Vorrichtungen zur Schmelzevermischung in Betracht. Vorzugsweise verwendet man einen Doppelschneckenextruder und verarbeitet die Komponenten bei einer Temperatur im Bereich von 200 bis 300°C.

Aus den erfindungsgemäßen Formmassen kann man durch Spritzgießen oder Blasformen Formkörper herstellen. Man kann die Formmassen auch verpressen, kalandrieren, extrudieren oder vakuumformen.

Die erfindungsgemäßen Formmassen weisen gegenüber solchen aus dem Stand der Technik eine verbesserte Kerbschlagzähigkeit, verbunden mit einer sehr guten Transparenz und einem niedrigen Gelbwertindex, auf.

### Beispiele

Die erfindungsgemäßen Formmassen wurden in üblicher Weise auf einem Zweiwellen-Extruder bei einer Temperatur im Bereich von 240 bis 300°C konfektioniert und bei den für Polymethylmethacrylat (PMMA) typischen Temperaturen (200-240°C) spritzgegossen.

Die Prüfung der Kerbschlagzähigkeit ak erfolgte gemäß DIN 53453-k an einem Normkleinstab.

Die optischen Eigenschaften (Transparenz, Gelbwertindex und Trübung (Haze)) wurden an Rundscheiben (80 mm x 6 mm) nach DIN 5036 gemessen.

### Folgende Materialien kamen zum Einsatz:

### Komponente A):

60 Gew.-Teile eines Copolymerisates aus 99 Gew.-% MMA und
1 Gew.-% MA (M_{w} = 100.000) und
40 Gew.-Teile eines mehrschaligen Kautschukes, bestehend aus
15 Gew.-% PMMA (mit 0,5 Gew.-% 1,4-Butandioldimethacrylat vernetzt, Kern), 65 Gew.-% eines Copolymerisates erhalten aus
82 Gew.- n-Butylacrylat und 18 Gew.-% Styrol (1. Hülle) und
20 Gew.-% PMMA (2. Hülle).

### Komponente B) :

- Polysiloxan 1: (PS1): R¹ = CH₃, R = -CH₂-CH₂-CH₂-NH₂,
Gewichtsmittelwert (M_{w}) = 4500 g/mol;
- Polysiloxan 2: (PS2): R¹ = CH₃, R = -CH₂-CH₂-CH₂-OH,
Gewichtsmittelwert (M_{w}) = 6500 g/mol;
- Polysiloxan 3: (PS3): R¹ = CH₃, R = OH,
Gewichtsmittelwert (M_{w}) = 500 g/mol, d.h. n < 5.

In der nachstehenden Tabelle sind die Zusammensetzungen der erfindungsgemäßen Mischungen sowie die Ergebnisse der optischen Beurteilung und der Kerbschlagzähigkeit (a_{K}) angegeben.

| Nr. | Polysiloxan | Stabilisator¹ | aₖ | Gelbwertindex | Licht-durchlässigkeit | Trübung (Haze) |
|---|---|---|---|---|---|---|
| | [Gew.-%] | [Gew.-%] | [kJ/m] | Yᵢ | [%] | [%] |
| erfindungsgemäß | | | | | | |
| 1 | 0,05 PS1 | - | 2,5 | 1,4 | 89,3 | 2,0 |
| 2 | 0,05 PS1 | 0,01 | 2,8 | 0,9 | 89,2 | 1,9 |
| 3 | 0,05 PS2 | - | 2,2 | 0,8 | 90,2 | 1,6 |
| 4 | 0,20 PS2 | - | 2,4 | 0,9 | 90,0 | 1,8 |
| zum Vergleich | | | | | | |
| 5 | - | - | 1,6 | 0,8 | 90,0 | 1,5 |
| 6 | 0,05 PS3 | - | 1,5 | 3,7 | 86,8 | 2,9 |
| 7 | 0,20 PS3 | - | 2,2 | 19,5 | 63,6 | 29,6 |

| | | | | | | |
|---|---|---|---|---|---|---|
| 1) Irganox B 900® (Mischung aus 4 Tl Tris-(2,4-di-tert.-butylphenyl)-phosphit und 1 Tl Octadecyl-3-(3,5-di-tert.-butyl-4-hydroxyphenyl)propionat der Firma Ciby-Geigy). | | | | | | |

## Patentansprüche

1. Formmassen auf der Basis von Polymethylmethacrylat, enthaltend im im wesentlichen
A) 99,99 bis 95,0 Gew.-% einer Mischung aus im wesentlichen
a₁) 5 bis 95 Gew.-% Polymethylmethacrylat, erhältlich durch Polymerisation einer Mischung aus im wesentlichen
a₁₁) 80 bis 100 Gew.-% Methylmethacrylat und
a₁₂) 0 bis 20 Gew.-% eines C₁-C₂₀-Alkylesters der Acrylsäure, und
a₂) 95 bis 5 Gew.-% eines mehrstufigen Pfropfcopolymerisats auf der Basis eines C1-C20-Alkylesters der Acryl- und/oder Methacrylsäure
und
B) 0,01 bis 5,0 Gew.-% eines Polysiloxans der allgemeinen Formel I 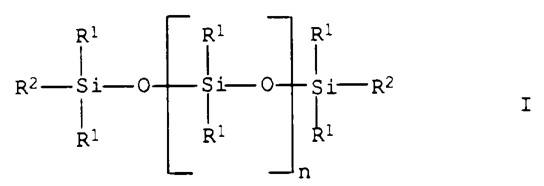 in der
R¹ für C₁-C₆-Alkyl oder C₆-C₁₀-Aryl, und
R für Hydroxy-C₁-C₆-alkyl oder Amino-C₁-C₆-alkyl stehen, und
n eine natürliche Zahl von 5 bis 200 bedeutet.

2. Formmassen auf der Basis von Polymethylmethacrylat nach Anspruch 1, dadurch gekennzeichnet, daß man als mehrstufiges Pfropfcopolymerisat auf der Basis eines C₁-C₂₀-Alkylesters der Acryl- und/oder Methacrylsäure ein dreistufiges Pfropfcopolymerisat einsetzt, das erhältlich ist durch
a₂₁) Polymerisation von 5 bis 25 Gew.-% eines Monomerengemisches aus im wesentlichen
a₂₁₁) 85 bis 100 Gew.-% Methylmethacrylat,
a₂₁₂) 0 bis 5 Gew.-% eines Vernetzers und
a₂₁₃) 0 bis 10 Gew.-% eines Pfropfvernetzers,
a₂₂) anschließende Polymerisation in Gegenwart des nach Stufe a₂₁) erhaltenen Polymerisates von 40 bis 80 Gew.-% eines Monomerengemisches aus im wesentlichen
a₂₂₁) 0 bis 40 Gew.-% eines vinylaromatischen Monomeren
a₂₂₂) 60 bis 100 Gew.-% eines C₁-C₂₀-Alkylesters der Acrylsäure und
a₂₂₃) 0 bis 5 Gew.-% eines Pfropfvernetzers,
und
a₂₃) anschließende Polymerisation in Gegenwart des nach Stufe a₂₂) erhaltenen Polymerisates von 10 bis 35 Gew.-% eines Monomerengemisches aus im wesentlichen
a₂₃₁) 80 bis 100 Gew.-% Methylmethacrylat und
a₂₃₂) 0 bis 20 Gew.-% eines C₁-C₂₀-Alkylesters der Acrylsäure,
wobei sich die Gewichtsprozente der in den jeweiligen Stufen eingesetzten Monomerengemische auf 100 Gew.-% addieren.

3. Verfahren zur Herstellung der Formmassen gemäß Anspruch 1, dadurch gekennzeichnet, daß man im wesentlichen
A) 99,99 bis 95,0 Gew.-% einer Mischung aus im wesentlichen
a₁) 5 bis 95 Gew.-% Polymethylmethacrylat, erhältlich durch Polymerisation einer Mischung aus im wesentlichen
a₁₁) 80 bis 100 Gew.-% Methylmethacrylat und
a₁₂) 0 bis 20 Gew.-% eines C₁-C₂₀-Alkylesters der Acrylsäure, und
a₂) 95 bis 5 Gew.-% eines mehrstufigen Pfropfcopolymerisats auf Basis eines C₁-C₂₀-Alkylesters der Acryl- und/oder Methacrylsäure,
und
B) 0,01 bis 5,0 Gew.-% eines Polysiloxans der allgemeinen Formel I 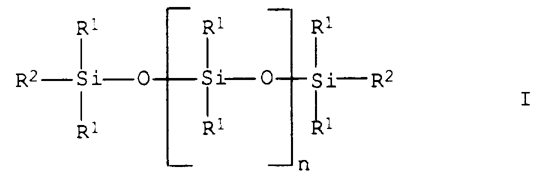 in der
R¹ für C₁-C₆-Alkyl oder C₆-C₁₀-Aryl, und
R für Hydroxy-C₁-C₆-alkyl oder Amino-C₁-C₆-alkyl stehen, und
n eine natürliche Zahl von 5 bis 200 bedeutet.
in der Schmelze mischt.

4. Verwendung der Formmassen gemäß den Ansprüchen 1 oder 2 zur Herstellung von Formkörpern.

5. Formkörper, erhältlich aus den Formmassen gemäß den Ansprüchen 1 oder 2.

## Claims

1. A molding material based on polymethyl methacrylate, containing essentially
A) from 99.99 to 95.0% by weight of a mixture comprising essentially
a₁) from 5 to 95% by weight of polymethyl methacrylate, obtainable by polymerizing a mixture comprising essentially
a₁₁) from 80 to 100% by weight of methyl methacrylate and
a₁₂) from 0 to 20% by weight of a C₁-₂₀-alkyl ester of acrylic acid, and
a₂) from 95 to 5% by weight of a multistage graft copolymer based on a C₁-₂₀-alkyl ester of acrylic and/or methacrylic acid
and
B) from 0.01 to 5.0% by weight of a polysiloxane of the formula I 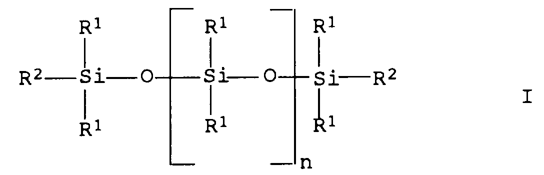 where
R¹ is C₁-₆-alkyl or C₆-C₁₀-aryl,
R is hydroxy-C₁-C₆-alkyl or amino-C₁-C₆-alkyl, and
n is a natural number from 5 to 200.

2. A molding material based on polymethyl methacrylate as claimed in claim 1, wherein a three-stage graft copolymer which is obtainable by
a₂₁) polymerization of from 5 to 25% by weight of a monomer mixture comprising essentially
a₂₁₁) from 85 to 100% by weight of methyl methacrylate,
a₂₁₂) from 0 to 5% by weight of a crosslinking agent and
a₂₁₃) from 0 to 10% by weight of a graft-linking agent,
a₂₂) subsequent polymerization, in the presence of the polymer obtained after stage a₂₁), of from 40 to 80% by weight of a monomer mixture comprising essentially
a₂₂₁) from 0 to 40% by weight of a vinylaromatic monomer,
a₂₂₂) from 60 to 100% by weight of a C₁-C₂₀-alkyl ester of acrylic acid and
a₂₂₃) from 0 to 5% by weight of a graft-linking agent
and
a₂₃) subsequent polymerization, in the presence of the polymer obtained after stage a₂₂), of from 10 to 35% by weight of a monomer mixture comprising essentially
a₂₃₁) from 80 to 100% by weight of methyl methacrylate and
a₂₃₂) from 0 to 20% by weight of a C₁-C₂₀-alkyl ester of acrylic acid,
the percentages by weight of the monomer mixtures used in the particular stages summing to 100% by weight,
is used as the multistage graft copolymer based on a C₁-C₂₀-alkyl ester of acrylic or methacrylic acid.

3. A process for the preparation of a molding material as claimed in claim 1, wherein essentially
A) from 99.99 to 95.0% by weight of a mixture comprising essentially
a₁) from 5 to 95% by weight of polymethyl methacrylate, obtainable by polymerization of a mixture comprising essentially
a₁₁) from 80 to 100% by weight of methyl methacrylate and
a₁₂) from 0 to 20% by weight of a C1-C20-alkyl ester of acrylic acid, and
a₂) from 95 to 5% by weight of a multistage graft copolymer based on a C₁-C₂₀-alkyl ester of acrylic or methacrylic acid
and
B) from 0.01 to 5.0% by weight of a polysiloxane of the formula I 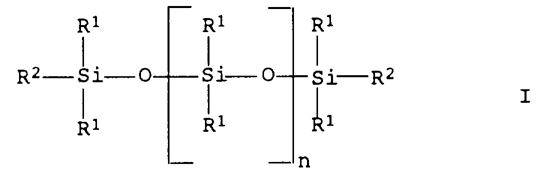 where
R¹ is C₁-C₆-alkyl or C₆-C₁₀-aryl,
R₂ is hydroxy-C₁-C₆-alkyl or amino-C₁-C₆-alkyl and
n is a natural number from 50 to 200,
are mixed in the melt.

4. The use of a molding material as claimed in claim 1 or 2 for the production of a molding.

5. A molding obtainable from a molding material as claimed in claim 1 or 2.

## Revendications

1. Masses à mouler à base de polyméthacrylate de méthyle, contenant essentiellement
A) 99,99 à 95,0% en poids d'un mélange composé essentiellement de
a₁) 5 à 95%g en poids de polyméthacrylate de méthyle obtenu par polymérisation d'un mélange formé essentiellement de
a₁₁) 80 à 100% en poids de méthacrylate de méthyle et
a₁₂) 0 à 20% en poids d'un ester alkylique en C₁-C₂₀ de l'acide acrylique, et
a₂) 95 à 5% en poids d'un copolymère greffé en plusieurs étapes, à base d'un ester alkylique en C₁-C₂₀ de l'acide acrylique et/ou méthacrylique,
et
B) 0,01 à 5,0% en poids d'un polysiloxane de formule générale I 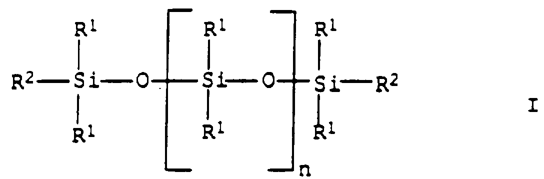 dans laquelle
R¹ est mis pour un reste alkyle en C₁-C₆ ou aryle en C₆-C₁₀,
R est mis pour un reste hydroxyalkyle en C₁-C₆ ou aminoalkyle en C₁-C₆ et
n est un entier naturel de 5 à 200.

2. Masses à mouler à base de polyméthacrylate de méthyle selon la revendication 1, caractérisées en ce que l'on utilise, comme copolymère greffé en plusieurs étapes à base d'un ester alkylique en C₁-C₂₀ de l'acide acrylique et/ou méthacrylique, un copolymère greffé en trois étapes qui est obtenu par
a₂₁) polymérisation de 5 à 25% en poids d'un mélange de monomères composé essentiellement de
a₂₁₁) 85 à 100% en poids de méthacrylate de méthyle,
a₂₁₂) 0 à 5% en poids d'un réticulant et
a₂₁₃) 0 à 10% en poids d'un réticulant de greffage,
a₂₂) polymérisation subséquente, en présence du polymère obtenu dans l'étape a₂₁), de 40 à 80% en poids d'un mélange de monomères composé essentiellement de
a₂₂₁) 0 à 40% en poids d'un monomère vinylaromatique,
a₂₂₂) 60 à 100% en poids d'un ester alkylique en C₁-C₂₀ de l'acide acrylique et
a₂₂₃) 0 à 5% en poids d'un réticulant de greffage,
et
a₂₃) polymérisation subséquente, en présence du polymère obtenu dans l'étape a₂₂), de 10 à 35% en poids d'un mélange de monomères composé essentiellement de
a₂₃₁) 80 à 100% en poids de méthacrylate de méthyle et
a₂₃₂) 0 à 20% en poids d'un ester alkylique en C₁-C₂₀ de l'acide acrylique,
les pourcentages en poids des mélanges de monomères utilisés dans les différentes étapes s'additionnant à 100% en poids.

3. Procédé de préparation des masses à mouler selon la revendication 1, caractérisé en ce que l'on mélange, à l'état fondu, essentiellement
A) 99,99 à 95,0% en poids d'un mélange composé essentiellement de
a₁) 5 à 95% en poids de polyméthacrylate de méthyle obtenu par polymérisation d'un mélange formé essentiellement de
a₁₁) 80 à 100% en poids de méthacrylate de méthyle et
a₁₂) 0 à 20% en poids d'un ester alkylique en C₁-C₂₀ de l'acide acrylique, et
a₂) 95 à 5% en poids d'un copolymère greffé en plusieurs étapes, à base d'un ester alkylique en C₁-C₂₀ de l'acide acrylique et/ou méthacrylique,
et
B) 0,01 à 5,0% en poids d'un polysiloxane de formule générale I 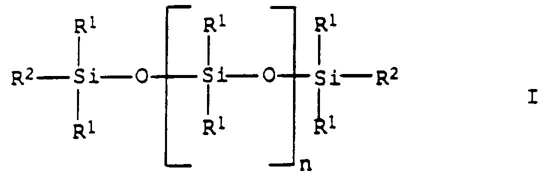 dans laquelle
R¹ est mis pour un reste alkyle en C₁-C₆ ou aryle en C₆-C₁₀,
R est mis pour un reste hydroxyalkyle en C₁-C₆ ou aminoalkyle en C₁-C₆ et
n est un entier naturel de 5 à 200.

4. Utilisation des masses à mouler selon la revendication 1 ou 2 pour la fabrication de corps moulés.

5. Corps moulés, obtenus à partir des masses à mouler selon la revendication 1 ou 2.
